# EUROPEAN PATENT SPECIFICATION

(11) **EP 2 098 278 B1**
(45) Date of publication and mention of the grant of the patent: **12.10.2011**
(21) Application number: 08151663.5
(22) Date of filing: 20.02.2008
(51) Int. Cl.: B01D 53/50

(54) **A spray dryer absorber disperser arrangement.**
Verteileranordnung für einen Sprühtrocknungsabsorber
Agencement de disperseurs pour un absorbeur-sécheur à pulvérisation

(43) Date of publication of application: 09.09.2009
(73) Proprietor: Alstom Technology Ltd, 5400 Baden (CH)
(72) Inventor: Åhman, Stefan, 352 42, VÄXJÖ (SE); Johansson, Lars-Erik, 360 23, ÄLMEBODA (SE); Rafidi, Nabil, 352 61, VÄXJÖ (SE); Tabikh, Ali, 352 53, VÄXJÖ (SE)
(74) Representative: Simonsson, Erik

(56) References cited:
- DE-A1- 3 508 260
- DE-A1- 19 651 074
- US-A- 4 452 765
- US-A- 4 519 990
- US-A- 5 639 430

## Description

### Field of the Invention

The present invention relates to a spray dryer absorber which is operative for removing gaseous pollutants from a hot process gas and comprises a spray dryer chamber and a plurality of dispersers mounted at a roof of the spray dryer chamber, each such disperser being operative for dispersing a portion of the hot process gas around a respective atomizer which is operative for atomizing an absorption liquid, each disperser being provided with a flow directing device, which is operative for providing the respective portion of the hot process gas with a rotary movement around the atomizer, as seen from the top of the spray dryer chamber.

The present invention further relates to a method of removing gaseous pollutants from a hot process gas by means of a spray dryer absorber.

### Background of the Invention

In the combustion of a fuel, such as coal, oil, peat, waste, etc., in a combustion plant, such as a power plant, a hot process gas is generated, such a hot process gas, often referred to as a flue gas, containing pollutants, including acid gases, such as sulphur dioxide, SO₂ . It is necessary to remove as much as possible of the acid gases from the flue gas before the flue gas may be emitted to the ambient air. A spray dryer absorber may be utilized for removing acid gases, including sulphur dioxide, from a flue gas.

An example of a spray dryer absorber can be found in US 4,755,366. The spray dryer absorber comprises a chamber which is provided with a rotary atomizer having an atomizer wheel. The rotary atomizer is supplied with an aqueous suspension, sometimes referred to as a slurry, which comprises an absorbent, such as limestone. The atomizer wheel spins at a high rpm and atomizes the aqueous suspension, such that very small droplets are formed. The small droplets absorb acid gas components from the flue gas, and then form a solid residue thanks to the drying effect of the spray dryer absorber.

A problem of the spray dryer absorber of US 4,755,366 is that it is difficult to increase the capacity of a single spray dryer absorber with respect to the flue gas flow rate. One reason for this difficulty is that the very high rpm of the atomizer wheel poses mechanical obstacles to up-scaling its size. Thus, it often becomes necessary to build two, three, or more, parallel spray dryer absorber chambers for coping with higher flue gas flow rates.

### Summary of the Invention

An object of the present invention is to provide a spray dryer absorber which can be designed for a higher flue gas flow rate than the spray dryer absorbers of the prior art.

This object is achieved by means of a spray dryer absorber which is operative for removing gaseous pollutants from a hot process gas and comprises a spray dryer chamber and a plurality of dispersers mounted at a roof of the spray dryer chamber, each such disperser being operative for dispersing a portion of the hot process gas around a respective atomizer which is operative for atomizing an absorption liquid, each disperser being provided with a flow directing device, which is operative for providing the respective portion of the hot process gas with a rotary movement around the atomizer, as seen from the top of the spray dryer chamber, the spray dryer absorber being characterised in comprising an even number of dispersers, such even number being at least 4, each of the dispersers being located at substantially the same distance from the periphery of the spray dryer chamber, the flow directing device of each disperser being operative for providing said portion of the hot process gas passing through that specific disperser with a rotatary movement in a direction, which is opposite to the direction of the rotary movement of the respective portions of the hot process gas dispersed by the two dispersers being located closest to that specific disperser, as seen along the periphery of the spray dryer chamber.

An advantage of this spray dryer absorber is that a plurality of dispersers can be arranged in one and the same spray dryer chamber, without such dispersers affecting each other in a negative way. Hence, the capacity with respect to the flue gas flow, and with respect to the absorption liquid flow, of one spray dryer absorber can be increased, still maintaining an efficient drying of liquid droplets, and an efficient removal of gaseous pollutants.

A spray dryer absorber according to the preamble of claim 1 is disclosed in US-A-4,519,990. Further prior art spray dryer absorbers are disclosed in US-A-5, 639,430 and US-A-4,452,765. According to one embodiment said even number is 4, 6 or 8. Such a number has been found to provide a spray dryer absorber which is efficient both with respect to investment cost, and with respect to removal of gaseous pollutants.

A further object of the present invention is to provide a method of removing gaseous pollutants from large volumes of hot process gas by means of a spray dryer absorber, such method being more efficient with respect to investment cost and removal efficiency than the prior art methods.

This object is achieved by means of a method of removing gaseous pollutants from a hot process gas by means of a spray dryer absorber comprising a spray dryer chamber and a plurality of dispersers mounted at a roof of the spray dryer chamber, each such disperser being operative for dispersing a portion of the hot process gas around a respective atomizer which is operative for atomizing an absorption liquid, each disperser being provided with a flow directing device, which is operative for providing the respective portion of the hot process gas with a rotary movement around the atomizer, as seen from the top of the spray dryer chamber, the method being characterised in causing the respective portion of the hot process gas passing through at least one of the dispersers to obtain a rotary movement in a direction, which is opposite to the direction of the rotary movement of the respective portions of the hot process gas dispersed by the two dispersers being located closest to said at least one of the dispersers, as seen along the periphery of the spray dryer chamber.

An advantage of this method is that the risk of obtaining unwanted effects, such as forming of large droplets, reduction of rotary movement, etc. is reduced in the areas where flow fields of dispersers being located adjacent to each other interact. This improves the efficiency of removing gaseous pollutants from the hot process gas and of drying the absorption liquid droplets.

Further objects and features of the present invention will be apparent from the description and the claims.

### Brief description of the drawings

The invention will now be described in more detail with reference to the appended drawings in which:
Fig. 1 is a schematic side view of a power plant.
Fig. 2 is a schematic three-dimensional view of a disperser.
Fig. 3a is a three-dimensional view of a spray dryer absorber in accordance with the prior art.
Fig. 3b is a top view of the spray dryer absorber of Fig. 3a.
Fig. 4a is a three-dimensional view of a spray dryer absorber in accordance with one embodiment of the present invention.
Fig. 4b is a top view of the spray dryer absorber of Fig. 4a.

### Description of preferred embodiments

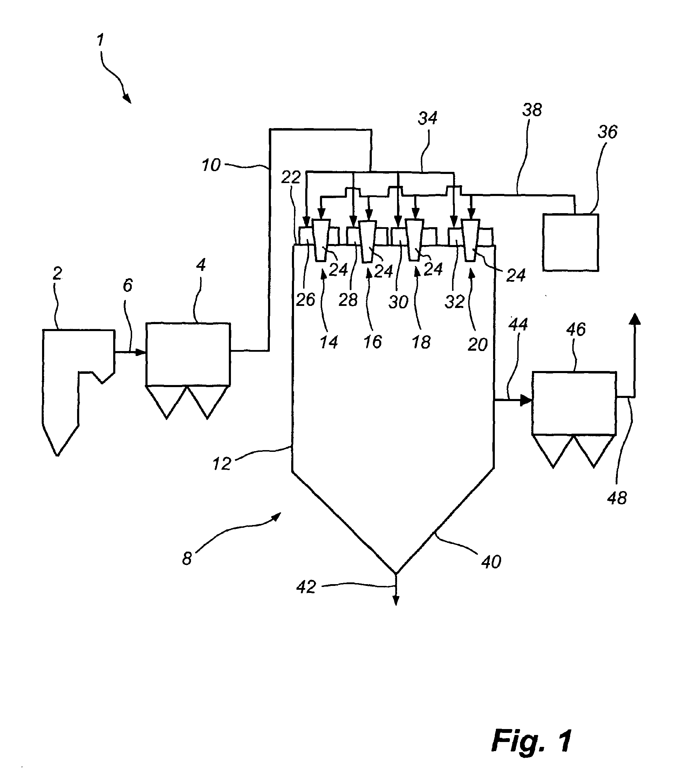

Fig. 1 is a schematic side view and illustrates a power plant 1. The power plant 1 comprises a boiler 2 in which a fuel, such as coal or oil, is combusted. The combustion of the fuel generates a hot process gas in the form of a flue gas. Sulphur species contained in the coal or oil will form sulphur dioxide, which will form part of the flue gas. The flue gas is forwarded from the boiler 2 to an electrostatic precipitator 4 via a duct 6. The electrostatic precipitator 4, an example of which is described in US 4,502,872, serves to remove dust particles from the flue gas.

The flue gas, from which most of the dust particles have been removed, is forwarded to a spray dryer absorber 8 via a duct 10. The spray dryer absorber 8 comprises a spray dryer chamber 12 and four dispersers 14, 16, 18, 20 that are mounted at a roof 22 of the spray dryer chamber 12. Each disperser 14, 16, 18, 20 comprises an atomizer 24. The atomizers 24 could be of the so-called rotary atomizer type, in which a wheel spinning at a high velocity is operative for atomizing an absorption liquid. In this regard, reference may be had, by way of exemplification and not limitation, to, for example, the rotary atomizer described in US 4,755,366. A further alternative is to utilize as the atomizers 24 atomizing nozzles which atomizes an absorption liquid which is supplied thereto under pressure.

Each disperser 14, 16, 18, 20 is provided with a flow directing device 26, 28, 30, 32. A dividing duct 34 is operative for supplying each of the dispersers 14, 16, 18, 20 with a portion of the flue gas, supplied via the duct 10. Each of the flow directing devices 26, 28, 30, 32 is operative for providing the respective portion of the flue gas with a rotary movement around the atomizer 24 of the respective disperser 14, 16, 18, 20. Two of the flow directing devices, namely the flow directing devices 26 and 30 of the dispersers 14, 18, are operative for providing the respective portion of the flue gas supplied thereto with a rotary movement around the respective atomizer 24 in the clockwise direction, as seen from the top of the spray dryer chamber 12. Two of the flow directing devices, namely the flow directing devices 28 and 32 of the dispersers 16, 20, are operative for providing the respective portion of the flue gas supplied thereto with a rotary movement around the respective atomizer 24 in the counter-clockwise direction, as seen from the top of the spray dryer chamber 12.

A tank 36 is operative for supplying each of the atomizers 24 with a flow of an absorption liquid, via a distributing pipe 38, such absorption liquid comprising, for example, a limestone slurry.

The action of the respective dispersers 14, 16, 18, 20 result in the mixing of flue gas with absorption liquid. The result is that the absorption liquid absorbs gaseous pollutants, such as sulphur dioxide, SO₂, from the flue gas. At the same time the absorption liquid is dried by the hot flue gas, resulting in a dry end product being collected at the bottom 40 of the spray dryer chamber 12. The dry product is removed for disposal via a pipe 42. The flue gas, from which most of the gaseous pollutants have been removed, leaves the spray dryer absorber 8 via a duct 44. The flue gas is forwarded, by means of the duct 44, to a second filter, which may, for example, be an electrostatic precipitator 46. As alternative the second filter may be a bag house or any other suitable filtering device. The second filter 46 removes most of the remaining dust particles, and any dried residues of the absorption liquid. A cleaned flue gas may then be admitted to the ambient air via a clean gas duct 48.

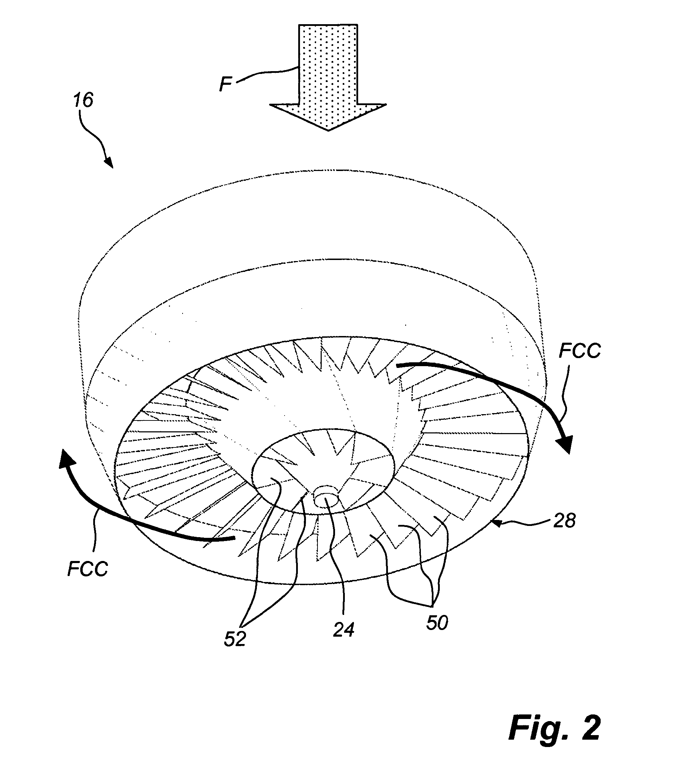

Fig. 2 illustrates the disperser 16 in more detail. The disperser 16 is illustrated as seen from below, at an angle. The flow directing device 28 of the disperser 16 comprises a plurality of outer guide vanes 50, and a plurality of inner guide vanes 52. The portion of the flue gas entering the disperser 16 from the dividing duct 34, illustrated in Fig. 1, has a generally downward direction, as illustrated in Fig. 2 by means of an arrow F. All of the guide vanes 50, 52 have such a direction that they will force the portion of the flue gas F to start rotating around the atomizer 24. Arrows FCC indicate how the guide vanes 50, 52 will deflect the flue gas, such that a flue gas flow rotating, spirally downwards, around the atomizer 24 will be formed. Such a rotating flue gas flow has been found to be very efficient for mixing the flue gas with the absorption liquid atomized by the atomizer 24. The direction of rotation of such flue gas flow FCC will, as seen from the top of the spray dryer chamber 12 illustrated in Fig. 1, be counter-clockwise in the case of the disperser 16.

It will be appreciated that the disperser 20 will have a similar design as the disperser 16 illustrated in Fig. 2. The flow directing devices 26, 30 of the dispersers 14 and 18, illustrated in Fig. 1, will, on the other hand, have guide vanes that have the opposite setting compared to the guide vanes 50, 52 of the flow directing device 28 illustrated in Fig. 2, such that the direction of rotation of the flue gas flow from the dispersers 14, 18 will, as seen from the top of the spray dryer chamber 12 illustrated in Fig. 1, be clockwise.

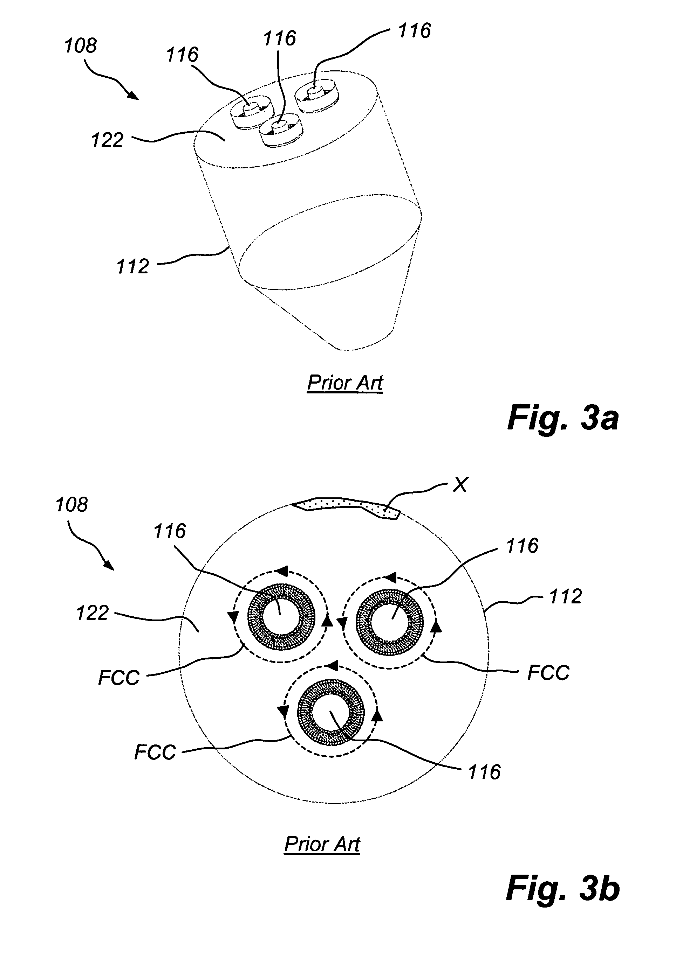

Fig. 3a illustrates a spray dryer absorber 108 in accordance with a prior art design. This spray dryer absorber 108 has a spray dryer chamber 112 and a roof 122. At its roof 122, the spray dryer absorber 108 is provided with three dispersers 116. Each of those dispersers 116 will have a similar design as the disperser 16 described hereinbefore with reference to Fig. 2.

Fig. 3b illustrates the spray dryer absorber 108 in accordance with the prior art design as seen from above. Since the three dispersers 116 each have a similar design as the disperser 16, illustrated hereinbefore with reference to Fig. 2, the flue gas supplied to each of the dispersers 116 will be provided with a rotary movement in the counter-clockwise direction, when viewed from the top of the spray dryer absorber 108. This is indicated in Fig. 3b by means of arrows FCC. It has been found, however, that operation of the prior art spray dryer absorber 108 illustrated in Fig. 3a and Fig. 3b results in severe problems with absorption liquid hitting the wall of the spray dryer chamber 112, e.g., at the position X illustrated in Fig. 3b. The absorption liquid hitting the wall of the spray dryer chamber 112 may result in the formation of large aggregates causing problems to the operation of the spray dryer absorber 108. Furthermore, it has been found that large droplets of absorption liquid are generated during operation of the spray dryer absorber 108. Such large droplets require much time to be dried. Hence, droplets that are not completely dried may end up in the bottom of the spray dryer chamber 112, or in a downstream filter, resulting in operational problems.

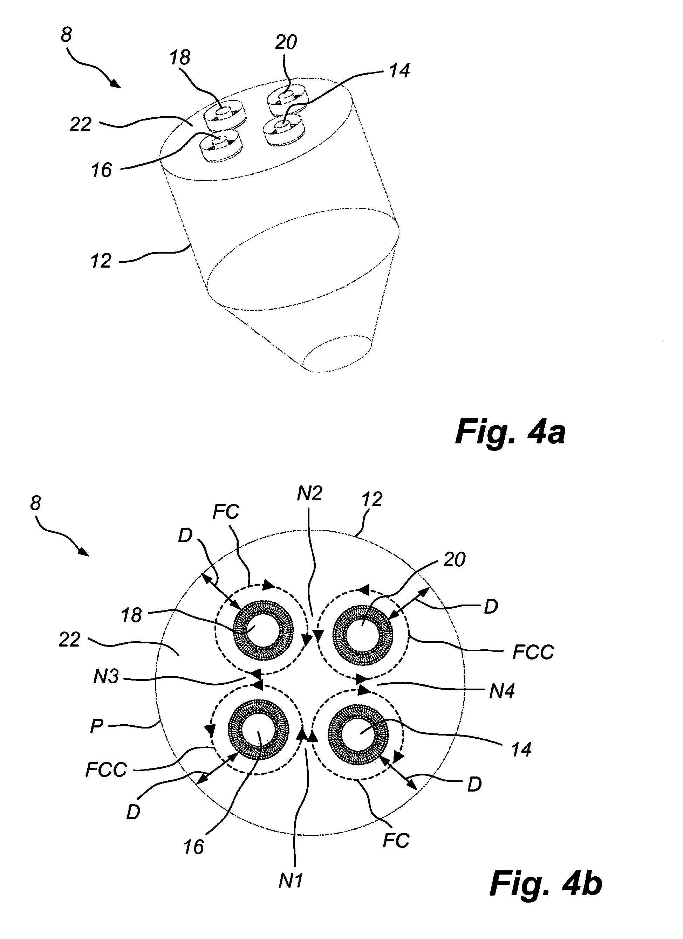

Fig. 4a illustrates the spray dryer absorber 8 in accordance with one embodiment of the present invention, as previously illustrated with reference to Fig. 1 and Fig. 2. In Fig. 4a it is clearly illustrated how the spray dryer chamber 12 is provided, at its roof 22, with the four dispersers 14, 16, 18, 20.

Fig. 4b illustrates the spray dryer absorber 8 as seen from above. As described hereinbefore, with reference to Fig. 2, the dispersers 16 and 20 provide the flue gas supplied thereto with a counter-clockwise rotary movement, as seen from the top, as illustrated in Fig. 4b. In Fig. 4b this counter-clockwise rotation is illustrated by means of arrows FCC. Furthermore, the dispersers 14 and 18 have a different design compared to the dispersers 16 and 20, and provide the flue gas supplied thereto with a clockwise rotary movement, as seen from the top, as illustrated in Fig. 4b. In Fig. 4b this clockwise rotation is illustrated by means of arrows FC.

Each of the dispersers 14, 16, 18, 20 is located at substantially the same distance D from the periphery P of the spray dryer chamber 12. Looking at the disperser 16, the flow directing device, denoted 50 and 52 and illustrated in detail in Fig. 2, of that disperser 16 is operative for providing the portion of the flue gas passing through that specific disperser 16 with a rotary movement in a direction, i.e., counter-clockwise direction as seen from above, which is opposite to the direction of the rotary movement, i.e., clockwise direction as seen from above, of the respective portions of the flue gas dispersed by the two dispersers 14, 18 being located closest to that specific disperser 16, as seen along the periphery P of the spray dryer chamber 12. Similarly, the disperser 14, providing the portion of the flue gas supplied thereto with a clockwise rotary movement, as seen from above, has, as its closest "neighbours", two dispersers 16 and 20 that provide the flue gas with a counter-clockwise rotary movement. Hence, each of the dispersers 14, 16, 18, 20 has, as its closest "neighbours" two dispersers that provide the flue gas with the opposite direction of movement, compared to the rotary movement provided to the flue gas by that specific disperser.

As an example, at the point N1 where the dispersers 14 and 16 are located closest to each other, the flow fields from both dispersers 14, 16 will be directed towards the centre of the spray dryer chamber 12. A similar flow behaviour will be present at the point N2 where the dispersers 18 and 20 are located closest to each other. Furthermore, at the point N3 where the dispersers 16 and 18 are located closest to each other, the flow fields from both dispersers 16, 18 will be directed towards the periphery P of the spray dryer chamber 12. A similar flow behaviour will be present at the point N4 where the dispersers 14 and 20 are located closest to each other. Hence, for all four points N1, N2, N3, N4 where the flow fields of two adjacent dispersers 14, 16, 18, 20 may interact, the flow fields of those two dispersers will always have the same direction, contrary to the prior art design, illustrated in Fig. 3a and Fig. 3b.

The design illustrated in Fig. 4a and 4b appears to provide a situation where the number of collisions between liquid droplets originating from any two adjacent dispersers is much reduced. The result is a decrease in the formation of large droplets compared to that of the prior art illustrated in Fig. 3a and 3b. Furthermore, in the spray dryer absorber 8 illustrated in Fig. 4a and 4b the rotary movement of the flue gas caused by the dispersers 14, 16, 18, 20 appears to last for an extended period of time, resulting in improved contact between the absorption liquid droplets and the flue gas, such improved contact resulting in an improved removal of gaseous pollutants and a shorter drying time of the liquid droplets. The risk of formation of large aggregates on the wall of the spray dryer chamber 12 also appears to be reduced compared to the prior art design.

It will be appreciated that numerous modifications of the embodiments described above are possible within the scope of the appended claims.

Above it has been described that the spray dryer absorber 8 is provided with 4 dispersers 14, 16, 18, 20. It will be appreciated that the same effect could be achieved with any even number of dispersers, located at the same distance D from the periphery P of the spray dryer chamber 12. Thus, a spray dryer absorber could alternatively be provided with 6, 8 or even 10 dispersers located at same distance D from the periphery P of the spray dryer chamber 12.

Furthermore, in a method of removing gaseous pollutants from a flue gas by means of a spray dryer absorber, the fact that the flue gas passing through at least one of a plurality of dispersers to obtain a rotary movement in a direction, which is opposite to the direction of the rotary movement of the respective portions of the flue gas dispersed by the two dispersers being located closest to that specific disperser, as seen along the periphery of the spray dryer chamber, results in improved removal efficiency with respect to the removal of gaseous pollutants, and a decreased risk of formation of solid aggregates inside the spray dryer chamber.

To summarize, a spray dryer absorber 8 is operative for removing gaseous pollutants from a hot process gas and comprises a plurality of dispersers 14, 16, 18, 20. Each such disperser 14, 16, 18, 20 is operative for dispersing a portion of the hot process gas around a respective atomizer 24, and for providing the respective portion of the hot process gas with a rotary movement around the atomizer 24. The spray dryer absorber 8 comprises an even number of dispersers 14, 16, 18, 20, such even number being at least 4. Each disperser 14 is operative for providing the hot process gas passing through that specific disperser 14 with a rotary movement in a direction FC, which is opposite to the direction FCC of the rotary movement of the respective portions of the hot process gas dispersed by the two dispersers 16, 20 being located closest to that specific disperser 14.

While the invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

## Claims

1. A spray dryer absorber (8) which is operative for removing gaseous pollutants from a hot process gas and comprises a spray dryer chamber (12) and a plurality of dispersers (14, 16, 18, 20) mounted at a roof (22) of the spray dryer chamber (12), each such disperser (14, 16, 18, 20) being operative for dispersing a portion of the hot process gas around a respective atomizer (24) which is operative for atomizing an absorption liquid, each disperser (14, 16, 18, 20) being provided with a flow directing device (50, 52), which is operative for providing the respective portion of the hot process gas with a rotary movement around the atomizer (24), as seen from the top of the spray dryer chamber (12), **characterised in**
the spray dryer absorber (8) comprising an even number of dispersers (14, 16, 18, 20), such even number being at least 4, each of the dispersers (14, 16, 18, 20) being located at substantially the same distance (D) from the periphery (P) of the spray dryer chamber (12), the flow directing device of each disperser (14) being operative for providing said portion of the hot process gas passing through that specific disperser (14) with a rotary movement in a direction (FC), which is opposite to the direction (FCC) of the rotary movement of the respective portions of the hot process gas dispersed by the two dispersers (16, 20) being located closest to that specific disperser (14), as seen along the periphery (P) of the spray dryer chamber (12).

2. A spray dryer absorber according to claim 1, wherein said even number is 4, 6 or 8.

3. A method of removing gaseous pollutants from a hot process gas by means of a spray dryer absorber (8) comprising a spray dryer chamber (12) and a plurality of dispersers (14, 16, 18, 20) mounted at a roof (22) of the spray dryer chamber (12), each such disperser (14, 16, 18, 20) being operative for dispersing a portion of the hot process gas around a respective atomizer (24) which is operative for atomizing an absorption liquid, each disperser (14, 16, 18, 20) being provided with a flow directing device (50, 52), which is operative for providing the respective portion of the hot process gas with a rotary movement around the atomizer (24), as seen from the top of the spray dryer chamber (12), **characterised in** causing the respective portion of the hot process gas passing through at least one (14) of the dispersers to obtain a rotary movement in a direction (FC), which is opposite to the direction (FCC) of the rotary movement of the respective portions of the hot process gas dispersed by the two dispersers (16, 20) being located closest to said at least one (14) of the dispersers, as seen along the periphery (P) of the spray dryer chamber (12).

4. A method according to claim 3, wherein the number of dispersers (14, 16, 18, 20) of the spray dryer chamber (12) is 4, 6 or 8.

## Patentansprüche

1. Sprühtrocknungsabsorber (8), der dahingehend betrieben werden kann, gasförmige Verunreinigungen aus einem heißen Prozessgas zu entfernen, und eine Sprühtrocknungskammer (12) und mehrere an einem Dach (22) der Sprühtrocknungskammer (12) montierte Dispersionsvorrichtungen (14, 16, 18, 20) umfasst, wobei jede derartige Dispersionsvorrichtung (14, 16, 18, 20) dahingehend betrieben werden kann, einen Teil des heißen Prozessgases um einen jeweiligen Zerstäuber (24) zu dispergieren, der dahingehend betrieben werden kann, eine Absorptionsflüssigkeit zu zerstäuben, wobei jede Dispersionsvorrichtung (14, 16, 18, 20) mit einer Stromlenkeinrichtung (50, 52) versehen ist, die dahingehend betätigt werden kann, dem jeweiligen Teil des heißen Prozessgases eine Drehbewegung um den Zerstäuber (24) zu geben, wie von der Oberseite der Sprühtrocknungskammer (12) aus gesehen, **dadurch gekennzeichnet, dass** der Sprühtrocknungsabsorber (8) eine gerade Anzahl von Dispersionsvorrichtungen (14, 16, 18, 20) umfasst, wobei diese gerade Zahl mindestens 4 beträgt, wobei sich jede der Dispersionsvorrichtungen (14, 16, 18, 20) im wesentlichen im gleichen Abstand (D) von der Peripherie (P) der Sprühtrocknungskammer (12) befindet, wobei die Stromlenkeinrichtung jeder Dispersionsvorrichtung (14) dahingehend betätigt werden kann, dem Teil des durch diese spezifische Dispersionsvorrichtung (14) hindurchtretenden heißen Prozessgases eine Drehbewegung in eine Richtung (FC) zu verleihen, die der Richtung (FCC) der Drehbewegung der jeweiligen Teile des heißen Prozessgases entgegengesetzt ist, die von den beiden Dispersionsvorrichtungen (16, 20) dispergiert werden, die dieser spezifischen Dispersionsvorrichtung (14) am nächsten liegen, wie entlang der Peripherie (P) der Sprühtrocknungskammer (12) gesehen.

2. Sprühtrocknungsabsorber nach Anspruch 1, wobei die gerade Zahl 4, 6 oder 8 beträgt.

3. Verfahren zum Entfernen Von gasförmigen Verunreinigungen aus einem heißen Prozessgas mit Hilfe eines Sprühtrocknungsabsorbers (8), der eine Sprühtrocknungskammer (12) und mehrere an einem Dach (22) der Sprühtrocknungskammer (12) montierte Dispersionsvorrichtungen (14, 16, 18, 20) umfasst, wobei jede derartige Dispersionsvorrichtung (14, 16, 18, 20) dahingehend betrieben werden kann, einen Teil des heißen Prozessgases um einen jeweiligen Zerstäuber (24) zu dispergieren, der dahingehend betrieben werden kann, eine Absorptionsflüssigkeit zu zerstäuben, wobei jede Dispersionsvorrichtung (14, 16, 18, 20) mit einer Stromlenkeinrichtung (50, 52) versehen ist, die dahingehend betätigt werden kann, dem jeweiligen Teil des heißen Prozessgases eine Drehbewegung um den Zerstäuber (24) zu geben, wie von der Oberseite der Sprühtrocknungskammer (12) aus gesehen, **dadurch gekennzeichnet, dass** bewirkt wird, dass der jeweilige Teil des durch mindestens eine (14) der Dispersionsvorrichtungen hindurchtretenden heißen Prozessgases eine Drehbewegung in einer Richtung (FC) erhält, die der Richtung (FCC) der Drehbewegung der jeweiligen Teile des heißen Prozessgases entgegengesetzt ist, die von den beiden Dispersionsvorrichtungen (16, 20) dispergiert werden, die sich der mindestens einen (14) der Dispersionsvorrichtungen am nächsten befinden, wie entlang der Peripherie (P) der Sprühtrocknungskammer (12) gesehen.

4. Verfahren nach Anspruch 3, wobei die Anzahl der Dispersionsvorrichtungen (14, 16, 18, 20) der Sprühtrocknungskammer (12) 4, 6 oder 8 beträgt.

## Revendications

1. Absorbeur-sécheur à pulvérisation (8) agissant pour retirer de polluants gazeux d'un gaz chaud de procédé et comprenant une chambre de sécheur à pulvérisation (12) et une pluralité de disperseurs (14, 16, 18, 20) montés sur un toit (22) de la chambre de sécheur à pulvérisation (12), chacun de ces disperseurs (14, 16, 18, 20) agissant pour disperser une partie du gaz chaud de procédé autour d'un atomiseur respectif (24) agissant lui-même pour atomiser un liquide d'absorption, chaque disperseur (14, 16, 18, 20) étant pourvu d'un dispositif de guidage d'écoulement (50, 52), qui agit pour communiquer à la partie respective de gaz chaud de procédé un mouvement rotatif autour de l'atomiseur (24), vu d'en haut de la chambre de sécheur à pulvérisation (12), **caractérisé en ce que**
l'absorbeur-sécheur à pulvérisation (8) comprend un nombre pair de disperseurs (14, 16, 18, 20), ledit nombre pair étant au moins 4, chacun des disperseurs (14, 16, 18, 20) étant situé sensiblement à la même distance (D) de la périphérie (P) de la chambre de sécheur à pulvérisation (12), le dispositif de guidage d'écoulement de chaque disperseur (14) agissant pour communiquer à ladite partie de gaz chaud de procédé traversant ce disperseur spécifique (14) un mouvement rotatif dans une direction (FC), qui est opposée à la direction (FCC) du mouvement rotatif des parties respectives de gaz chaud de procédé dispersées par les deux disperseurs (16, 20) les plus proches de ce disperseur spécifique (14), vu le long de la périphérie (P) de la chambre de sécheur à pulvérisation (12).

2. Absorbeur-sécheur à pulvérisation selon la revendication 1, dans lequel ledit nombre pair est 4, 6 ou 8.

3. Procédé pour retirer de polluants gazeux d'un gaz chaud de procédé au moyen d'un absorbeur-sécheur à pulvérisation (8) comprenant une chambre de sécheur à pulvérisation (12) et une pluralité de disperseurs (14, 16, 18, 20) montés sur un toit (22) de la chambre de sécheur à pulvérisation (12), chacun de ces disperseurs (14, 16, 18, 20) agissant pour disperser une partie du gaz chaud de procédé autour d'un atomiseur respectif (24) agissant lui-même pour atomiser un liquide d'absorption, chaque disperseur (14, 16, 18, 20) étant pourvu d'un dispositif de guidage d'écoulement (50, 52), qui agit pour communiquer à la partie respective de gaz chaud de procédé un mouvement rotatif autour de l'atomiseur (24), vu d'en haut de la chambre de sécheur à pulvérisation (12), **caractérisé en ce que**
ledit procédé fait que ladite partie respective de gaz chaud de procédé traversant au moins un (14) de ces disperseurs subit un mouvement rotatif dans une direction (FC), qui est opposée à la direction (FCC) du mouvement rotatif des parties respectives de gaz chaud de procédé dispersées par les deux disperseurs (16, 20) les plus proches dudit au moins un (14) des disperseurs, vu le long de la périphérie (P) de la chambre de sécheur à pulvérisation (12).

4. Procédé selon la revendication 3, dans lequel le nombre de disperseurs (14, 16, 18, 20) de la chambre de sécheur à pulvérisation (12) est 4, 6 ou 8.
